# EUROPEAN PATENT APPLICATION

(11) **EP 3 072 750 A1**
(43) Date of publication of application: **28.09.2016**
(21) Application number: 15160899.9
(22) Date of filing: 25.03.2015
(51) Int. Cl.: B60R 21/0136, B61L 23/04

(54) **COLLISION DETECTION FOR A VEHICLE**

(71) Applicant: Bombardier Transportation GmbH, 10785 Berlin (DE)
(72) Inventor: Kristensen, Julien, 10435 Berlin (DE); Trommeshauser, Wolfgang, 16515 Oranienburg (DE)
(74) Representative: Cohausz & Florack

(57) **Abstract**

The present invention relates to a collision detection device for detecting a collision of a vehicle, in particular, a rail vehicle, with a collision partner, comprising a collision unit (110), a mounting device (109) for mounting the collision detection device to the vehicle, and a sensor device (111). The collision unit (110) comprises at least one collision element (110.1) for contacting the collision partner in a collision event. The sensor device (111) is configured to generate a first collision signal representative of a first threshold collision event having a definable first threshold severity as a function of a first threshold relative deflection of the collision unit (110) relative to the mounting device (109) from a neutral position during the first threshold collision event. The collision unit (110) is coupled to the mounting device (109) via a resetting unit (114) and via a guide element (109.2), in particular a hinge element, defining a motion of the collision element (110.1) during the collision event. The resetting unit (114) is configured to undergo, during the threshold collision event, a first elastic resetting unit deflection from a neutral resetting unit position. The resetting unit (114) is configured to undergo, during a second threshold collision event having a second threshold severity greater that the first threshold severity, a second elastic resetting unit deflection, the second elastic resetting unit deflection being larger than the first elastic resetting unit deflection. The resetting unit (114) is configured to elastically reset, in a resetting action, from the second elastic resetting unit deflection to substantially the neutral resetting unit position upon removal of the collision partner, thereby resetting the collision unit (110) to substantially the neutral position.

## Description

### BACKGROUND OF THE INVENTION

The present invention relates to a collision detection device for detecting a collision of a vehicle, in particular, a rail vehicle, with a collision partner, comprising a collision unit, a mounting device for mounting the collision device to the vehicle, and a sensor device. The collision unit comprises at least one collision element for contacting the collision partner in a collision event. The sensor device is configured to generate a first collision signal representative of a first threshold collision event having a definable first threshold severity as a function of a first threshold relative deflection of the collision unit relative to the mounting device from a neutral position during the first threshold collision event. The collision unit is coupled to the mounting device via a resetting unit and via a guide element, in particular a hinge element, defining a motion of the collision element during the collision event. The resetting unit is configured to undergo, during the threshold collision event, a first elastic resetting unit deflection from a neutral resetting unit position. The present invention also relates to a corresponding method of detecting a collision of a vehicle with a collision partner.

Such collision detection is well known in railway applications in the context of so called obstacle deflectors. These obstacle deflectors are typically used at the leading running gear to remove obstacles located on the track or in the track bed at a certain height above rail level. Some obstacle deflectors also have an obstacle detection device that generates, upon a collision of the obstacle deflector with an obstacle (i.e. an impact partner), a collision signal that can be processed by the control device of the rail vehicle and, for example, triggers an emergency braking action.

Such a collision detection is known, for example, from EP 2 548 783 A2 (the entire disclosure of which is incorporated herein by reference). Here, a collision element of a collision unit is rotatably mounted to a mounting device and held in position by a retaining bolt. At a certain threshold impact of given threshold impact severity, the retaining bolt shears off, such that deflection collision element occurs. This deflection is then detected by a sensor device associated to a part of the collision unit leading to a corresponding collision signal.

A problem of this collision detection device is that any impact of sufficient severity leading to a collision signal requires revision of the collision detection device and replacement of the retaining bolt, whereas impacts of lower severity remain undetected and, hence, unknown. Such impacts of lower severity may nevertheless lead to gradually increasing damage of the retaining bolt (e.g. by gradual fracture propagation) which gradually lowers the threshold impact severity at which the retaining bolt fails and the collision signal and the corresponding vehicle response, such as an emergency braking action, is generated. This may lead to undesired early collision signals and corresponding reactions.

A collision detection device as outlined initially is known from KR 10-0837174 B1 (the entire disclosure of which is incorporated herein by reference). Here, a collision element of a collision unit is elastically held and, at a certain threshold impact of given threshold impact severity, part of the collision unit contacts a hard stop with a sensor device leading to a corresponding collision signal. After the obstacle is removed, the collision unit is elastically reset back to its initial neutral position.

A problem of this collision detection device is that the severity of impacts going beyond the threshold severity leading to the collision signal may not be distinguished. Hence, any collision signal requires thorough revision of the collision detection device and eventual replacement of parts of the collision detection device eventually damaged due to the unknown severity of the impact.

### BRIEF DESCRIPTION OF THE INVENTION

The object for the present invention is therefore to provide collision detection of the type mentioned initially, which does not or at least to a lesser degree have the disadvantages mentioned above and which, in particular, provides simple and long term reliable collision detection requiring reduced revision effort of the collision detection device.

The present invention solves this problem on the basis of a collision detection device according to the preamble of claim 1 by means of the features indicated in the characterizing part of claim 1. The present invention further solves this problem on the basis of a method of collision detection according to the preamble of claim 10 by means of the features indicated in the characterizing part of claim 10.

The present invention is based on the technical teaching that simple and long term reliable collision detection requiring reduced revision effort of the collision detection device may be achieved if the resetting unit provides elastic deflection and resetting (to the neutral position) of the collision element beyond the initial threshold at which a first collision signal is provided. By this means it is possible to provide, for example, an elastic deflection range of the collision element for a range of impacts of higher severity (than the threshold severity leading to the first collision signal), upon which the collision signal (and the corresponding reaction, such as e.g. an emergency braking) is also generated but which do not require inspection of the collision detection device, since it is clear that a certain damage threshold has not been reached.

To this end, for example, one or more further threshold deflections of the resetting unit and/or the collision element may be monitored. This allows classification of the collision event and its severity, respectively. Hence, a more precise revision scheme may be implemented avoiding the need for thorough inspection after each impact beyond the initial threshold severity (at which the first collision signal is generated).

Hence, according to one aspect, the present invention relates to a collision detection device for detecting a collision of a vehicle, in particular, a rail vehicle, with a collision partner, comprising a collision unit, a mounting device for mounting the collision device to the vehicle, and a sensor device. The collision unit comprises at least one collision element for contacting the collision partner in a collision event. The sensor device is configured to generate a first collision signal representative of a first threshold collision event having a definable first threshold severity as a function of a first threshold relative deflection of the collision unit relative to the mounting device from a neutral position during the first threshold collision event. The collision unit is coupled to the mounting device via a resetting unit and via a guide element, in particular a hinge element, defining a motion of the collision element during the collision event. The resetting unit is configured to undergo, during the threshold collision event, a first elastic resetting unit deflection from a neutral resetting unit position. The resetting unit is configured to undergo, during a second threshold collision event having a second threshold severity greater than the first threshold severity, a second elastic resetting unit deflection, the second elastic resetting unit deflection being larger than the first elastic resetting unit deflection. The resetting unit is configured to elastically reset, in a resetting action, from the second elastic resetting unit deflection to substantially the neutral resetting unit position upon removal of the collision partner, thereby resetting the collision unit to substantially the neutral position.

It will be appreciated that the resetting unit may be of any desired and suitable design providing the resetting function from the second elastic resetting unit deflection. Preferably, the resetting unit is a damping unit comprising at least one damping element damping the relative deflection of the collision unit. By this means the collision energy and the collision loads, respectively, transferred into the vehicle via the collision detection device may be reduced.

The resetting force may be generated by any suitable means. For example, in a very simple and robust variant, the resetting unit comprises at least one resetting element in the form of a spring element for generating a resetting force during the resetting action. Such a spring element may, for example, be an elastic all-metal cushion element made from one or more entangled metal wires (e.g. a knitted wire mesh) forming a sponge-like elastic pad or cushion structure. Such all-metal cushions units are highly robust components which are readily available in a wide range of resetting force characteristics and damping characteristics (the damping characteristics being defined by the friction between the entangled metal wire parts).

With particularly simple and robust embodiments, the resetting unit comprises at least one elastic polymer element, in particular a rubber element, for generating a resetting force during the resetting action. Furthermore, preferably, the resetting unit may comprise at least one layered metal polymer unit, in particular a layered metal rubber unit, for generating a resetting force during the resetting action. Such layered metal polymer units are highly robust components which are typically made of consecutive layers of metal sheets and elastic polymer layers or polymer elements. Such layered metal polymer units are readily available in a wide range of resetting force characteristics and damping characteristics.

The collision detection device may operate according to any desired operating principle allowing generation of the elastic resetting force. For example, the resetting force may be generated according to a tensile force principle, where an elastic resetting element is loaded with a tensile force upon deflection of the collision element. With other variants, however, a compressive force principle is selected, where an elastic resetting element is loaded with a compressive force upon deflection of the collision element, since it allows a fairly simple, compact and robust configuration. Apparently, both principles may also be combined.

For example, preferably, the resetting unit comprises a first hard stop element, a second hard stop element and a resetting element. The first hard stop element is substantially rigidly connected to the collision unit and the second hard stop element is substantially rigidly connected to the mounting device, such that the first hard stop element and the second hard stop element are shifted with respect to each other in a first direction during a first deflection of the collision element. The resetting element is located between the first hard stop element and the second hard stop element, such that the resetting element is deflected due to the shift between the first hard stop element and the second hard stop element in the first direction. Such a design yields a fairly simple, compact and robust configuration, which is advantageous in railway applications with strict weight and building space requirements. It should be noted in this respect that, in the sense of the present invention, a substantially rigid connection has a rigidity that is at least one (decimal) order of magnitude (typically several orders of magnitude) higher than the rigidity of the resetting element in the direction of deflection.

Preferably, the resetting unit comprises a guide element guiding the resetting element during the deflection to ensure proper operation in a simple manner. Basically, any desired type of guide element may be used to guide the resetting element during deflection. Preferably, the guide element is a simple linear guide element and/or a simple rod element, since this yields a very compact design.

It will be appreciated that the guide element may be held in any desired suitable manner. Preferably, the guide element substantially rigidly connected to either the mounting device or the collision unit, thereby achieving a simple and compact unit.

It will be appreciated that the collision detection device may only operate in one direction, e.g. for detecting (predominantly frontal) impacts of an obstacle or collision partner located on the track currently travelled. Preferably, however, the collision detection device is configured to distinguish between different types of collision events by allowing collision deflections of the collision unit in two different directions as it is generally known, for example, from EP 2 548 783 A2. By this means a distinction may be made, for example, between a first type of collision event, where the collision element hits an obstacle located on the track, and a second type of collision event, where the collision element hits parts of the track, e.g. a rail of the track in case of derailment of the vehicle.

Hence, with certain variants, the resetting unit comprises a third hard stop element and a further resetting element. The third hard stop element is substantially rigidly connected to the collision unit or to the mounting device, while the third hard stop element and a counter hard stop element are shifted with respect to each other in a second direction opposite to the first direction during a second deflection of the collision element. The counter hard stop element may be either the first hard stop element or the second hard stop element. The further resetting element is located between the counter hard stop element and the third hard stop element and is deflected due to the shift between the counter hard stop element and the third hard stop element. Such a design yields a fairly simple, compact and robust configuration with bidirectional deflection.

The resetting unit again may comprise a guide element guiding the further resetting element during the deflection, wherein the guide element, again, may be a linear guide element and/or a rod element. Again, the guide element may be substantially rigidly connected to either the mounting device or the collision unit as it has been described above to yield a compact design.

With certain preferred embodiments, the third hard stop element has a mechanical connection to the mounting device, wherein the third hard stop element and/or the mechanical connection are configured to fail at a definable threshold shift between the counter hard stop element and the third hard stop element in the second direction to substantially liberate motion of the collision element. By this means, in a simple and reliable manner, the introduction of collision loads into the vehicle via the collision detection device may be limited.

The mechanical connection of the third hard stop element to the mounting device may include the guide element, such that a very simple and compact arrangement may be achieved.

The third hard stop element may be of any suitable design. With very simple configurations, the third hard stop element may comprise a disc shaped element connected to the guide element.

As mentioned above, with certain embodiments, the collision detection device is configured for bidirectional deflection of the collision element from its neutral position in order to allow distinction between different types of collision events. Hence, preferably, the collision unit is configured to undergo a deflection from the neutral position in a first direction upon a first type of collision event and to undergo a deflection from the neutral position in a second direction opposite to the first direction upon a second type of collision event. In this case, the resetting unit comprises at least one first resetting element for generating a resetting force during the resetting action in the second direction upon the first type of collision event. Similarly, the resetting unit comprises at least one second resetting element for generating a resetting force during the resetting action in the first direction upon the second type of collision event. Here, the first type of collision event may be a collision with a collision partner located on a track travelled by the vehicle, while the second type of collision event may be a collision with a part of the track during a derailment event of the vehicle.

With certain preferred embodiments a limitation of the collision loads and the collision energy, respectively, introduced into the vehicle via the collision detection device is provided. To this end, preferably, the collision unit is configured to undergo, during the first threshold collision event, a first collision unit deflection from the neutral position and to undergo, during the second threshold collision event, a second collision unit deflection, the second collision unit deflection being larger than the first collision unit deflection. Furthermore, the collision unit comprises a collision energy absorbing plastic deformation part for reducing collision loads introduced into the vehicle, the plastic deformation part being configured to undergo, in a third collision event having a severity greater than the second threshold severity, a defined locally concentrated plastic deformation. The defined locally concentrated plastic deformation of the plastic deformation part, in an advantageous manner, leads to an impact energy absorption and, hence, a reduction of the collision loads introduced into the vehicle.

The defined locally concentrated plastic deformation may be achieved in any suitable way, e.g. by a part of the collision unit that is structurally weaker than the remaining parts and/or a part of the collision unit where a stress concentration occurs, such that the plastic deformation is initiated and proceeds in this deformation part. Structural weakening and/or stress concentration may be obtained in any suitable way. Preferably, the plastic deformation part is a structurally weakened section and/or a recessed section of the collision unit.

The limitation of the elastic deflection of the collision element and/or the initiation of the plastic deformation may be obtained in any suitable way. Preferably, the mounting device comprises a hard stop element limiting a reversible deflection of the collision unit to a limit deflection, the limit deflection being substantially equal to or greater than the second collision unit deflection.

As mentioned initially, the present invention allows defining an elastic deflection range of the collision element for a range of collision events of higher severity (than the threshold severity leading to the first collision signal), upon which the collision signal (and the corresponding reaction, such as e.g. an emergency braking) is also generated but which do not require inspection of the collision detection device, since it is clear that a certain damage threshold has not been reached.

Hence, with certain embodiments of the invention, the sensor device is configured to generate a second threshold collision signal representative of the second threshold collision event as a function of a second threshold relative deflection of the collision unit relative to the mounting device from the neutral position during the second threshold collision event. In addition or as an alternative, the sensor device may be configured to generate a third threshold collision signal representative of a third threshold collision event as a function of a third threshold relative deflection of the collision unit relative to the mounting device from the neutral position during a third collision event having a severity larger than the second threshold severity. In either case, the second threshold collision signal or the third threshold collision signal may represent a damage threshold at which inspection of the collision detection device is required.

As mentioned above, with certain embodiments, the collision detection device is configured for distinction between different types of collision events. Hence, with certain embodiments of the invention the sensor device is configured to generate, in a collision event of a first type of collision event, a first collision type signal representative of the first type of collision event, and to generate, in a collision event of a second type of collision event, a second collision type signal representative of the second type of collision event. The first type of collision event may be a collision with a collision partner located on a track travelled by the vehicle. The second type of collision event may be a collision with a part of the track during a derailment event of the vehicle. As outlined above, to this end, the collision unit may be configured for bidirectional deflection of the collision element from its neutral position. Hence, the collision unit may be configured to undergo a deflection from the neutral position in a first direction upon the first type of collision event and to undergo a deflection from the neutral position in a second direction opposite to the first direction upon the second type of collision event.

It will be appreciated however that, with certain very simple embodiments, the collision detection device may also not be configured for such a distinction between different types of collision events. In this case, irrespective of the type of collision event, the sensor device may generate the same collision signal in any collision event. Hence, for example, the collision signal may be the same for a collision with a collision partner located on the track travelled by the vehicle as for a collision with a part of the track during a derailment event of the vehicle.

It will be appreciated that any desired type of sensor allowing the generation of corresponding collision signals may be used. For example, one or more contact sensors may be used, which are contacted upon the respective deflection of the collision unit, in particular, the collision element of the collision unit. Preferably, the sensor device comprises an inductive sensor unit and/or a capacitive sensor unit and/or a contactless sensor unit. Furthermore, preferably, the sensor device comprises an indicator element and a sensor element, the indicator element cooperating with the sensor element and being connected to and deflected with the collision element in a collision event.

The present invention further relates to a vehicle unit, in particular a rail vehicle unit, comprising a running gear and at least one collision detection device according to the invention mounted in the area of the running gear via the mounting device. The at least one collision detection device may be mounted to the running gear itself or to a wagon body of the vehicle unit supported on the running gear. Herewith, the variants and advantages of the collision detection device according to the invention as outlined above may be realized to the same extent, such that, insofar, reference is made to the explanations given above.

Finally, according to a further aspect, the present invention further relates to a method of detecting a collision of a vehicle, in particular, a rail vehicle, with a collision partner. The method comprises coupling a collision element to a mounting device via a resetting unit and via a guide element, in particular a hinge element, defining a motion of the collision element during a collision event with the collision partner. The method further comprises

generating a first collision signal representative of a first threshold collision event having a definable first threshold severity as a function of a first threshold relative deflection of the collision element relative to the mounting device from a neutral position during the first threshold collision event. The resetting unit, during the first threshold collision event, undergoes a first elastic resetting unit deflection from a neutral resetting unit position. The resetting unit, during a second threshold collision event having a second threshold severity greater than the first threshold severity, undergoes a second elastic resetting unit deflection, the second elastic resetting unit deflection being larger than the first elastic resetting unit deflection. The resetting unit, in a resetting action upon removal of the collision partner, elastically resets from the second elastic resetting unit deflection to substantially the neutral resetting unit position, thereby resetting the collision unit to substantially the neutral position.

Herewith, the variants and advantages of the collision detection device according to the invention as outlined above may be realized to the same extent, such that, insofar, reference is made to the explanations given above.

Further preferred embodiments of the invention become apparent from the dependent claims or the following description of preferred embodiments which refers to the attached drawings.

### BRIEF DESCRIPTION OF THE DRAWINGS

- Figure 1: is a schematic side view of a part a preferred embodiment of a rail vehicle unit according to the invention with a preferred embodiment of a collision detection device according to the invention;
- Figure 2: is a schematic perspective view of the collision detection device of the vehicle unit from Figure 1;
- Figure 3: is a schematic sectional view of a part of the vehicle unit from Figure 1 (along line III-III from Figure 2) in a neutral state;
- Figure 4: is a schematic sectional view of the part from Figure 3 in a first deflected state;
- Figure 5: is a schematic sectional view of the part from Figure 3 in a second deflected state;
- Figure 6: is a schematic sectional view of the part from Figure 3 in a third deflected state;
- Figure 7: is a schematic sectional view of the part from Figure 3 in a fourth deflected state.

### DETAILED DESCRIPTION OF THE INVENTION

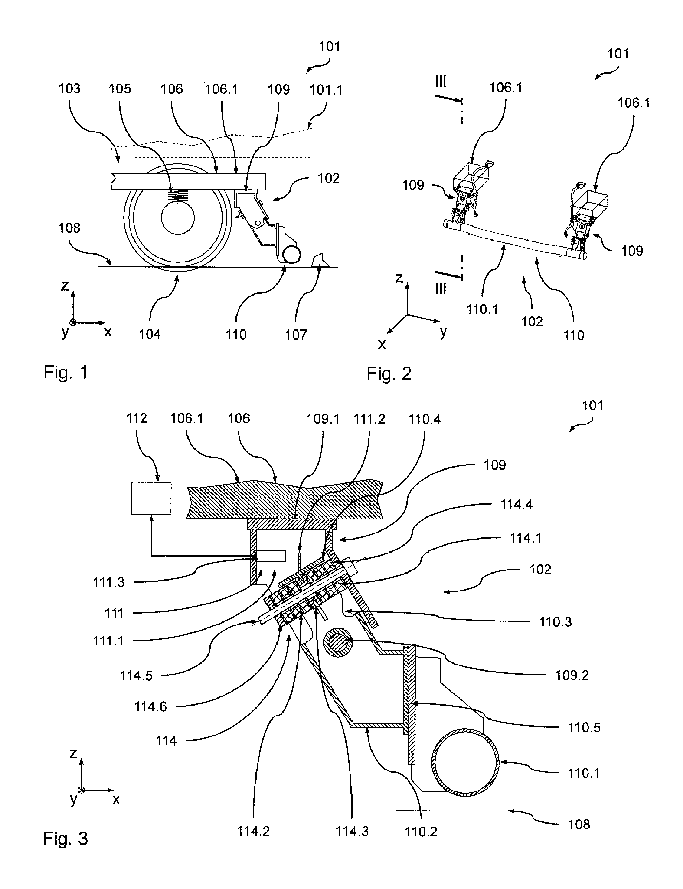

In the following, a preferred embodiment of a vehicle unit 101 according to the invention comprising a preferred embodiment of a collision detection device according to the invention in the form of an obstacle deflector 102 will be described with reference to Figures 1 to 7. The vehicle unit 101 may be a vehicle of a train set and, hence, may be coupled to one or more further vehicles (not shown) of the train set. Moreover, all or some of the vehicles of the train set, typically the end vehicles forming the leading end and the trailing end of the train set, may implement the present invention as described herein. Similarly, in a single vehicle configuration, the present invention may be implemented at both ends of the vehicle.

Figure 1 shows a schematic side view of a part of the vehicle unit 101. The vehicle unit 101 comprises a conventional single wagon body (typically fully equipped and indicated in Figure 1 by the dashed contour 101.1), which in the area of its leading end is supported on a running gear in the form of a bogie 103 by means of a secondary spring device (not shown). In the area of its trailing end, the wagon body is supported by means of a further secondary spring device on a further running gear in the form of a second bogie 103. The bogies 103 are of identical design. Similar applies to the secondary spring devices. It is self-evident, however, that the present invention can also be used with other configurations in which other running gear designs are employed.

For ease of understanding of the explanations that follow, a coordinate system x, y, z (determined by the wheel contact plane of the bogies 103) is indicated in the figures, in which the x coordinate denotes the longitudinal direction of the rail vehicle 101, the y coordinate denotes the transverse direction of the rail vehicle 101 and the z coordinate denotes the height direction of the rail vehicle 101.

The bogie 103 comprises two wheel sets 104, each of which supports a common bogie frame 106 via a primary suspension 105. The wagon body is supported via a secondary suspension on the bogie frame 106. The primary suspension 105 is shown in simplified form in Figure 1 as a helical spring. It is self-evident, however, that the primary suspension 105 or the secondary suspension can be any suitable spring device. In particular, the secondary suspension preferably is a sufficiently well-known pneumatic suspension or similar.

As can be seen from Figure 1 and 2, the obstacle deflector 102 is mounted to the two longitudinal beams 106.1 (schematically indicated as a wire contour in Figure 2) of the bogie frame 106 via mounting attachments located at the leading end of the bogie frame 106. As will be explained in greater detail below, in the mounted state, the obstacle deflector 102 allows detection and removal of obstacles 107 on a track 108, especially on the rails of the track 108, and the detection of derailment of the vehicle unit 101.

The obstacle deflector 102 at each side (in the transverse direction) of the bogie 103 is provided with a mounting device 109 comprising a flange element 109.1 for connecting the obstacle deflector 102 to the bogie frame 106. It will be appreciated that any connecting techniques (such as e.g. welding, riveting, screwing etc.) may be used for this connection either alone or in arbitrary combinations. In the present example, the mounting device 109 is a monolithic component which is connected to the bogie frame 106 via screws. However, it can also be designed as multi-part component.

The obstacle deflector 102 further comprises a collision unit 110 with a collision element in the form of a collision beam 110.1 for contacting the collision partner 108 in a collision event. The collision beam 110.1 extends in the transverse direction between the left and right side of the bogie 103 to cover at least the whole track width of the track 108. The collision beam 110.1, in the present example, is made of a hollow tube profile. It will be appreciated, however, that any other collision element or profile suitable for contacting and clearing obstacles from the track 108 may be used.

At each side of the bogie 103 the collision unit 110 further comprises a collision unit arm 110.2. Each collision unit arm 110.2, at one of its ends, is rigidly connected to the collision beam 110.1, while its other end is linked to the associated mounting device 109 by a guide element in the form of a hinge element 109.2. The hinge element 109.2 defines a motion of the collision element 110.1 during a collision event of the collision element 110.1 with a collision partner, such as the obstacle 107 on the track 108 or the rails of the track 108 in case of derailment.

The obstacle deflector 102 further comprises a sensor device 111 mounted to each mounting device 109. The sensor device 111 is configured to generate collision signals SIGx and provide the collision signals SIGx to a control unit 112 of the vehicle unit 101, which then initiates appropriate measures as a function of the signal SIGx provided, such as e.g. an emergency braking action in case of a severe collision or in case of derailment.

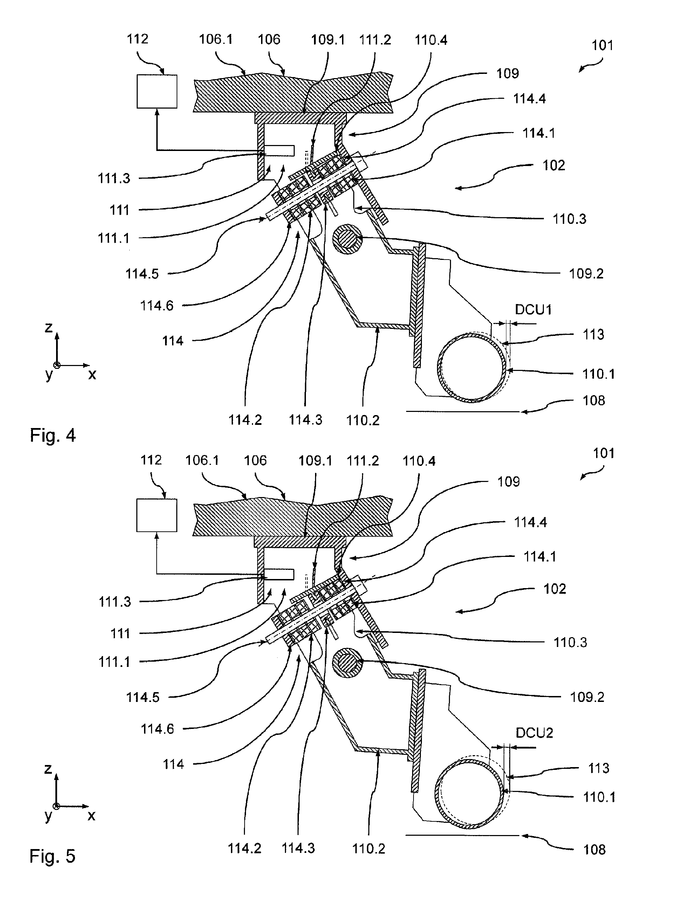

More precisely, the sensor device 111 is configured to generate a first collision signal SIG1 representative of a first threshold collision event TCE1 having a definable first threshold severity TSEV1 as a function of a first threshold relative deflection TDCU1 of the collision unit 110 relative to the mounting device 109 from the neutral position (shown in Figure 3 and indicated by the dashed contour 113 in Figures 4 to 7) during the first threshold collision event TCE1.

Figure 4 shows the state during the first threshold collision event TCE1, where first threshold relative deflection TDCU1 is reached as a maximum deflection, such that the sensor device 111 generates the first collision signal CSIG1 and provides the first collision signal CSIG1 to the control unit 112. The control unit 112 then initiates a corresponding reaction to the first threshold collision event TCE1 (e.g. a notification to the driver of the vehicle unit, a slowing down of the vehicle unit 101 or even an emergency braking action).

It will be appreciated that any desired type of sensor device 111.1 allowing the generation of corresponding collision signals CSIGx may be used. For example, one or more contact sensors may be used, which are contacted upon the respective deflection of the collision unit 110. In the present example, the sensor device 111 comprises a contactless sensor unit in the form of an inductive sensor unit 111.1.

The sensor unit 111.1 comprises an indicator element 111.2 and a sensor element 111.3, wherein the indicator element 111.2 cooperates with the sensor element 111.3 in such a manner that a change in the relative position between the indicator element 111.2 and the sensor element 111.3 leads to a change in the signal CSIGx provided by the sensor element 111.3. The indicator element 111.2 is rigidly connected to the collision unit arm 110.2 and, hence, is deflected together with the collision element 110.1 in a collision event CE, which then leads to a change in the signal SIGx provided by the sensor element 111.3. Hence, depending on the spatial resolution of the sensor element 111.3, arbitrarily many signals or signal levels of the sensor unit 111.1 (corresponding to different relative positions between the indicator element 111.2 and the sensor element 111.3) may be defined to trigger different reactions of the control device 112.

As can be seen from Figure 3 to 7, the collision unit 110 is further coupled to each mounting device 109 via a resetting unit in the form of a damping unit 114. The damping unit 114 comprises two resetting elements in the form of elastic damping elements 114.1 and 114.2 each made of a layered metal polymer unit, more precisely a layered metal rubber spring made of consecutive layers of metal sheets and elastic rubber elements. It will be appreciated that, with certain embodiments of the invention, a single rubber spring element may be used for the respective elastic damping element 114.1 and 114.2.

Furthermore, with other embodiments of the invention, one or more elastic all-metal cushion elements may be used for the respective elastic damping element 114.1 and 114.2. For example, in the configuration shown in Figure 3 to 7, the elastic rubber elements may be replaced by such all-metal cushion elements. Hence, the respective elastic damping element 114.1 and 114.2 may be made of consecutive layers of metal sheets and all-metal cushion elements. Furthermore, with certain embodiments of the invention, one single all-metal cushion element may be used for the respective elastic damping element 114.1 and 114.2.

The elastic damping elements 114.1 and 114.2, on the one hand, damp the deflection of the collision unit 110 relative to the mounting device 109 in a collision event CE. By this means the collision energy and the collision loads, respectively, transferred into the vehicle unit 101 via the obstacle deflector 102 may be reduced.

On the other hand, the resetting elements 114.1 and 114.2, when deflected, generate an elastic resetting force FR. Upon removal of the collision partner (e.g. removal of obstacle 107 from the track 108), the elastic resetting force FR of the respective resetting element 114.1, 114.2 substantially resets the deflected collision unit 110 back to its neutral position (shown in Figure 3) during a resetting action RA.

As can be seen from Figure 4, the resetting unit 113, during the first threshold collision event TCE1, undergoes a first elastic resetting unit deflection DRU1 from a neutral resetting unit position (shown in Figure 3). As can be further seen from Figure 5, during a second threshold collision event TCE2 having a second threshold severity TSEV2 greater than the first threshold severity TSEV1, the resetting unit 113 undergoes a second elastic resetting unit deflection DRU2, which is larger than the first elastic resetting unit deflection DRU1. In this second threshold collision event TCE2, where the second threshold relative deflection TDCU2 is reached as a maximum deflection, the sensor device 111 generates a second collision signal CSIG2 and provides the second collision signal CSIG2 to the control unit 112.

Nevertheless, the resetting unit 113, with its first resetting element 114.1 undergoing the second elastic resetting unit deflection DRU2 (i.e. despite exceeding the first elastic resetting unit deflection DRU1, where the first collision signal CSIG1 is generated), still is in its elastic operation range, where it is able to generate an elastic resetting force FR. Hence, also in this (more severe) second threshold collision event TCE2, upon removal of the collision partner (e.g. removal of obstacle 107 from the track 108), the elastic resetting force FR of the first resetting element 114.1 substantially resets to the neutral resetting unit position (as shown in Figure 3), thereby resetting the deflected collision unit 110 back to its neutral position (as shown in Figure 3) during a resetting action RA.

The elastic resetting force FR, in the present example, is generated according to a compressive force principle. More precisely, the respective resetting element 114.1, 114.2 is loaded with a compressive force upon deflection of the collision element 110.1. To this end, the resetting unit 114 comprises a first hard stop element 114.3 and a second hard stop element 114.4. The first hard stop element 114.3 is substantially rigidly connected to the hinged end of the arm 110.2 of the collision unit 110. The second hard stop element 114.4 is formed at a part of the mounting device 109 located adjacent to the first hard stop element 114.3. Hence, the first hard stop element 114.3 and the second hard stop element 114.4 are shifted with respect to each other, more precisely moved towards each other, during a first deflection of the collision element 110.1 in a first direction (clockwise rotation in Figure 3 to 7).

In the present example, in relation to the rotation axis defined by the hinge element 109.2, the first hard stop element 114.3 is located at a location opposite to the collision unit 110. It will be appreciated that, with other embodiments, the first hard stop element 114.3 could also be located on the same side of the rotation axis (defined by the hinge element 109.2) as the collision unit 110.

The first resetting element 114.1 is located between the first hard stop element 114.3 and the second hard stop element 114.4, such that the resetting element 114.1 is compressively deflected due to the shift between the first hard stop element 114.3 and the second hard stop element 114.4 in the first direction. Such a design yields a fairly simple, compact and robust configuration, which is advantageous in railway applications with strict weight and building space requirements.

As can be seen from Figure 3 to 7, the resetting unit 114 further comprises a linear guide element in the form of a simple rod element 114.5 reaching (with a certain play) through a central recess within the first resetting element 114.1 as well as a recess within the first hard stop element 114.3. The guide rod element 114.5 (when necessary at a certain lateral deflection of the first resetting element 114.1) guides the first resetting element 114.1 during the deflection to ensure proper operation in a simple manner. In the present example, the guide element 114.5 is substantially rigidly connected to the mounting device 109. With other variants it could however also be connected to the collision unit 110 instead.

In the present example, a limitation of the collision loads and the collision energy, respectively, introduced into the vehicle unit 101 via the collision detection device 102 is provided. To this end, the collision unit 110 comprises a collision energy absorbing plastic deformation part 110.3, which is undergoes a defined locally concentrated plastic deformation in a third collision event CE3 having a severity SEV3 greater than the second threshold severity TSEV2. The defined locally concentrated plastic deformation of the plastic deformation part 110.3, in an advantageous manner, leads to an impact energy absorption and, hence, a reduction of the collision loads introduced into the vehicle unit 101.

The defined locally concentrated plastic deformation is achieved by a recessed and, hence, structurally weakened part 110.3 of the arm 110.2 of the collision unit 110, where, in addition, a stress concentration occurs, such that the plastic deformation is initiated in a defined manner and proceeds in this deformation part 110.3.

The limitation of the elastic deflection of the collision element and the initiation of the plastic deformation in this deformation part 110.3 is achieved by comprises a limiting hard stop element of the mounting device 109, which, in the present example, is also formed by the second hard stop 114.4. The second hard stop 114.4 limits a reversible deflection of the collision unit to a limit deflection DCUL, at which a hard stop 110.4 at the hinged end of the arm 110.2 contacts the second hard stop 114.4. As can be seen from Figure 5, the limit deflection DCUL is substantially equal to the second collision unit deflection DCU2.

Hence, any collision with a severity SEV greater than the second threshold severity TSEV2 will lead to a deformation of the deformation part 110.3, which then requires inspection of the collision detection device 102. Hence, as soon as the sensor device 111 generates the second collision signal CSIG2, the control unit 112 (by suitable means) indicates the necessity to inspect the collision detection device 102.

As a consequence, the present invention allows defining an elastic deflection range of the collision element 110.1 for a range of collision events CE of higher severity SEV (than the first threshold severity TSEV1 leading to the first collision signal CSIG1), upon which the first collision signal CSIG1 (and the corresponding reaction, such as e.g. an emergency braking) is also generated, but which do not require inspection of the collision detection device 102, since it is clear that a certain damage threshold (namely second threshold severity TSEV2, where the second collision signal CSIG2 is generated) has not been reached.

It will be appreciated that, with other variants, a further, third threshold severity TSEV3 (greater than the second threshold severity TSEV2) at which a third collision signal CSIG3 is generated, may be used as the damage threshold. In this case, any collision with a severity SEV equal to the third threshold severity TSEV3 will lead to a deformation of the deformation part 110.3, which then requires inspection of the collision detection device 102. Hence, as soon as the sensor device 111 generates the third collision signal CSIG3, the control unit 112 (by suitable means) indicates the necessity to inspect the collision detection device 102.

In the present example, in the collision events CE shown in Figures 4 and 5, the collision detection device 102 operates in a first direction for detecting (predominantly frontal) impacts of an obstacle 107 or collision partner located on the track 108 currently travelled.

The collision detection device 102 is further configured to distinguish between different types of collision events CE by allowing collision deflections of the collision unit 110 in a different second direction (counter-clockwise rotation in Figure 3 to 7). By this means a distinction may be made between a first type of collision event CET1, where the collision element 110.1 hits an obstacle 107 located on the track 108, and a second type of collision event CET2, where the collision element 110.1 hits parts of the track 108, e.g. a rail of the track 108, in case of derailment of the vehicle unit 101.

To this end, the resetting unit 114 comprises a third hard stop element 114.6 substantially rigidly connected to the mounting device 109, such that the third hard stop element 114.6 and the first hard stop element 114.3 are shifted with respect to each other, more precisely moved towards each other, during a second deflection of the collision element 110.1 in a second direction opposite to the first direction (counter-clockwise rotation in Figure 3 to 7). The second resetting element 114.2 is located between the first hard stop element 114.3 and the third hard stop element 114.6 and is guided by the guide rod 114.5. The second resetting element 114.2 is compressively deflected due to the approaching shift between the first hard stop element 114.3 and the third hard stop element 114.6. Such a design yields a fairly simple, compact and robust configuration with bidirectional deflection of the collision element 110.1.

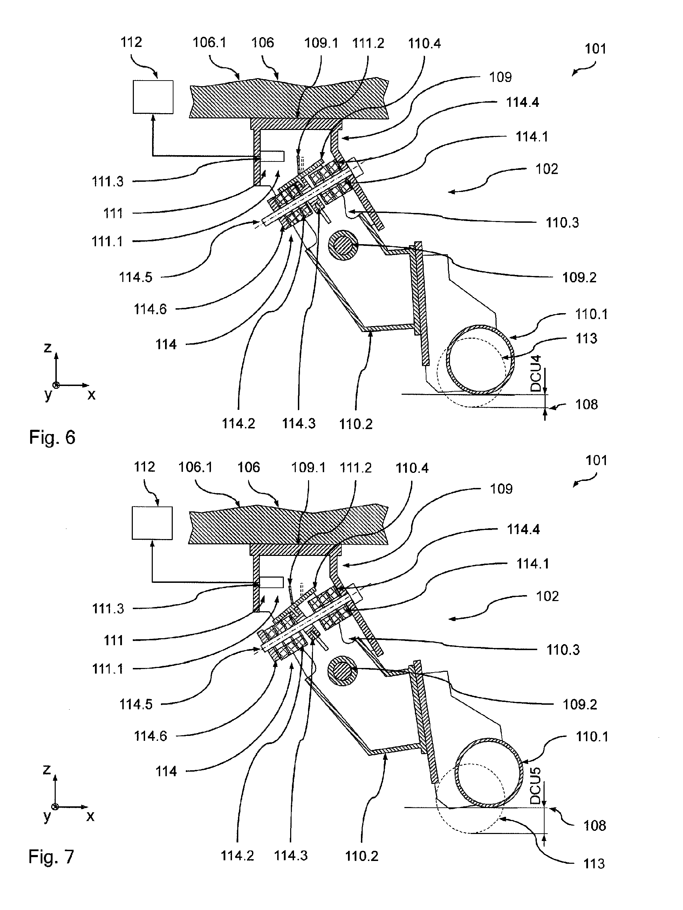

In the present embodiment, the third hard stop element 114.6 is a disc shaped element connected to the guide rod 114.5. As indicated in Figure 7, the mechanical connection of the third hard stop element 114.6 to the guide rod 114.5 is configured to fail at a definable threshold shift between the first hard stop element 114.3 and the third hard stop element 114.6 to substantially liberate motion of the collision element 110.1 in the second direction. By this means, in a simple and reliable manner, the introduction of collision loads into the vehicle unit 101 via the collision detection device 102 may be limited.

As can be seen from Figure 6, the resetting unit 113, during a fourth threshold collision event TCE4, undergoes a fourth elastic resetting unit deflection DRU4 from the neutral resetting unit position (shown in Figure 3). In this fourth threshold collision event TCE4, where the fourth threshold relative deflection TDCU4 is reached as a maximum deflection, the sensor device 111 generates a fourth collision signal CSIG4 and provides the fourth collision signal CSIG4 to the control unit 112. The control unit 112, in response to the fourth collision signal CSIG4, determines that a derailment event DE has occurred and initiates corresponding measures (such as e.g. emergency braking of the vehicle unit 101).

It will be appreciated that the collision element 110.1 is connected to the respective arm 110.2 in a height adjustable manner via a flange element 110.5 (e.g. a toothed plate) in order to be able to maintain the proper height position of the collision element 110.1 above the track level of the track 108 upon wear of the wheels of the wheel sets 104.

The present invention, in the foregoing, has only been described by way of an example for rail vehicles. It will be appreciated, however, that the present invention may also be used for any other type of vehicle experiencing similar problems with obstacle impacts.

## Claims

1. A collision detection device for detecting a collision of a vehicle, in particular, a rail vehicle, with a collision partner, comprising
- a collision unit (110),
- a mounting device (109) for mounting said collision detection device to said vehicle, and
- a sensor device (111);
- said collision unit (110) comprising at least one collision element (110.1) for contacting said collision partner in a collision event;
- said sensor device (111) being configured to generate a first collision signal representative of a first threshold collision event having a definable first threshold severity as a function of a first threshold relative deflection of said collision unit (110) relative to said mounting device (109) from a neutral position during said first threshold collision event;
- said collision unit (110) being coupled to said mounting device (109) via a resetting unit (114) and via a guide element (109.2), in particular a hinge element, defining a motion of said collision element (110.1) during said collision event;
- said resetting unit (114) being configured to undergo, during said threshold collision event, a first elastic resetting unit deflection from a neutral resetting unit position;
**characterized in that**
- said resetting unit (114) is configured to undergo, during a second threshold collision event having a second threshold severity greater that said first threshold severity, a second elastic resetting unit deflection, said second elastic resetting unit deflection being larger than said first elastic resetting unit deflection;
- said resetting unit (114) being configured to elastically reset, in a resetting action, from said second elastic resetting unit deflection to substantially said neutral resetting unit position upon removal of said collision partner, thereby resetting said collision unit (110) to substantially said neutral position.

2. The collision detection device according to claim 1, wherein
- said resetting unit (114) is a damping unit comprising at least one damping element damping said relative deflection of said collision unit (110);
and/or
- said resetting unit (114) comprises at least one resetting element in the form of a spring element (114.1, 114.2) for generating a resetting force during said resetting action;
and/or
- said resetting unit (114) comprises at least one elastic all-metal cushion element (114.1, 114.2) for generating a resetting force during said resetting action;
and/or
- said resetting unit (114) comprises at least one elastic polymer element (114.1, 114.2), in particular a rubber element, for generating a resetting force during said resetting action;
and/or
- said resetting unit (114) comprises at least one layered metal polymer unit (114.1, 114.2), in particular a layered metal rubber unit, for generating a resetting force during said resetting action.

3. The collision detection device according to one of claims 1 or 2, wherein
- said resetting unit (114) comprises a first hard stop element (114.3), a second hard stop element (114.4) and a resetting element (114.1);
- said first hard stop element (114.3) being substantially rigidly connected to said collision unit (110),
- said second hard stop element (114.4) being substantially rigidly connected to said mounting device (109)
- said first hard stop element (114.3) and said second hard stop element (114.4) being shifted with respect to each other during a first deflection of said collision element (110.1) in a first direction
- said resetting element (114.1, 114.2) being located between said first hard stop element (114.3) and said second hard stop element (114.4) and being deflected due to said shift between said first hard stop element (114.3) and said second hard stop element (114.4);
- said resetting unit (114), in particular, comprising a guide element (114.4) guiding said resetting element (114.1) during said deflection;
- said guide element (114.4), in particular being a linear guide element and/or a rod element;
- said guide element (114.4), in particular being substantially rigidly connected to said mounting device (109) or said collision unit (110).

4. The collision detection device according to claim 3, wherein
- said resetting unit (114) comprises a third hard stop element (114.6) and a further resetting element (114.2);
- said third hard stop element (114.6) being substantially rigidly connected to said collision unit (110) or to said mounting device (109)
- said third hard stop element (114.6) and a counter hard stop element (114.3) being shifted with respect to each other in a second direction opposite to said first direction during a second deflection of said collision element (110.1), said counter hard stop element (114.3) being said first hard stop element (114.3) or said second hard stop element (114.4);
- said further resetting element (114.1, 114.2) being located between said counter hard stop element (114.3) and said third hard stop element (114.6) and being deflected due to said shift between said counter hard stop element (114.3) and said third hard stop element (114.6);
- said resetting unit (114), in particular, comprising a guide element (114.4) guiding said further resetting element (114.1, 114.2) during said deflection;
- said guide element (114.4), in particular being a linear guide element and/or a rod element;
- said guide element (114.4), in particular being substantially rigidly connected to said mounting device (109) or said collision unit (110).

5. The collision detection device according to claim 4, wherein
- said third hard stop element (114.6) has a mechanical connection to said mounting device (109);
- said third hard stop element (114.6) and/or said mechanical connection being configured to fail at a definable threshold shift between said counter hard stop element (114.3) and said third hard stop element (114.6) in said second direction to substantially liberate motion of said collision element (110.1);
- said mechanical connection, in particular, including said guide element (114.4);
- said third hard stop element (114.6), in particular, comprising a disc shaped element connected to said guide element (114.4).

6. The collision detection device according to one of claims 1 to 5, wherein
- said collision unit (110) is configured to undergo a deflection from said neutral position in a first direction upon a first type of collision event and to undergo a deflection from said neutral position in a second direction opposite to said first direction upon a second type of collision event;
- said resetting unit (114) comprising at least one first resetting element (114.1, 114.2) for generating a resetting force during said resetting action in said second direction upon said first type of collision event;
- said resetting unit (114) comprising at least one second resetting element (114.1, 114.2) for generating a resetting force during said resetting action in said first direction upon said second type of collision event;
- said first type of collision event, in particular, being a collision with a collision partner located on a track travelled by said vehicle;
- said second type of collision event, in particular, being a collision with a part of said track during a derailment event of said vehicle.

7. The collision detection device according to one of claims 1 to 6, wherein,
- said collision unit (110) is configured to undergo, during said first threshold collision event, a first collision unit deflection from said neutral position and to undergo, during said second threshold collision event, a second collision unit deflection, said second collision unit deflection being larger than said first collision unit deflection;
- said collision unit (110) comprising a collision energy absorbing plastic deformation part (110.3) for reducing collision loads introduced into said vehicle;
- said plastic deformation part (110.3) being configured to undergo, in a third collision event having a severity greater that said second threshold severity, a defined locally concentrated plastic deformation;
- said plastic deformation part (110.3), in particular, being a structurally weakened section and/or a recessed section of said collision unit (110);
- said mounting device (109), in particular, comprising a hard stop element limiting a reversible deflection of said collision unit (110) to a limit deflection, said limit deflection being substantially equal to or greater than said second collision unit (110) deflection.

8. The collision detection device according to one of claims 1 to 7, wherein,
- said sensor device (111) is configured to generate a second threshold collision signal representative of said second threshold collision event as a function of a second threshold relative deflection of said collision unit (110) relative to said mounting device (109) from said neutral position during said second threshold collision event;
and/or
- said sensor device (111) is configured to generate a third threshold collision signal representative of a third threshold collision event as a function of a third threshold relative deflection of said collision unit (110) relative to said mounting device (109) from said neutral position during a third collision event having a severity larger than said second threshold severity;
and/or
- said sensor device (111) is configured to generate, in a collision event of a first type of collision event, a first collision type signal representative of said first type of collision event and to generate, in a collision event of a second type of collision event, a second collision type signal representative of said second type of collision event, said first type of collision event, in particular, being a collision with a collision partner (107) located on a track (108) travelled by said vehicle and said second type of collision event, in particular, being a collision with a part of said track (108) during a derailment event of said vehicle, said collision unit (110), in particular, being configured to undergo a deflection from said neutral position in a first direction upon said first type of collision event and to undergo a deflection from said neutral position in a second direction opposite to said first direction upon said second type of collision event.
and/or
- said sensor device (111) comprises an inductive sensor unit (111.1) and/or a capacitive sensor unit and/or a contactless sensor unit (111.1)
and/or
- said sensor device (111) comprises an indicator element (111.2) and a sensor element (111.3), said indicator element (111.2) cooperating with said sensor element (111.3) and being connected to and deflected with said collision element (110.1) in an collision event.

9. A vehicle unit, in particular a rail vehicle unit, comprising a running gear (103) and at least one collision detection device (102) according to one of claims 1 to 8 mounted in the area of said running gear (103) via said mounting device (109), said at least one collision detection device (102), in particular, being mounted to said running gear (103) or to a wagon body (101.1) supported on said running gear (103).

10. A method of detecting a collision of a vehicle, in particular, a rail vehicle, with a collision partner, comprising
- coupling a collision element (110.1) to a mounting device (109) via a resetting unit (114) and via a guide element (109.2), in particular a hinge element, defining a motion of said collision element (110.1) during a collision event with said collision partner (107, 108);
- generating a first collision signal representative of a first threshold collision event having a definable first threshold severity as a function of a first threshold relative deflection of said collision element (110.1) relative to said mounting device (109) from a neutral position during said first threshold collision event;
- said resetting unit (114), during said first threshold collision event, undergoing a first elastic resetting unit deflection from a neutral resetting unit position;
**characterized in that**
- said resetting unit (114), during a second threshold collision event having a second threshold severity greater that said first threshold severity, undergoes a second elastic resetting unit deflection, said second elastic resetting unit deflection being larger than said first elastic resetting unit deflection;
- said resetting unit (114), in a resetting action upon removal of said collision partner (107, 108), elastically resetting from said second elastic resetting unit deflection to substantially said neutral resetting unit position, thereby resetting said collision unit (110) to substantially said neutral position.

11. The method according to claim 10, wherein
- said resetting unit (114) is damping said relative deflection of said collision unit (110);
and/or
- at least one spring element (114.1, 114.2) of said resetting unit (114) is generating a resetting force during said resetting action;
and/or
- at least one elastic all-metal cushion element (114.1, 114.2) of said resetting unit (114) is generating a resetting force during said resetting action;
and/or
- at least one elastic polymer element (114.1, 114.2), in particular a rubber element, of said resetting unit (114) is generating a resetting force during said resetting action;
and/or
- at least one layered metal polymer unit, in particular a layered metal rubber unit, of said resetting unit (114) generates a resetting force during said resetting action.

12. The method according to one of claims 10 or 11, wherein
- a resetting element (114.1, 114.2) of said resetting unit (114) is located between a first hard stop element (114.3) and a second hard stop element (114.4), said resetting element (114.1, 114.2), during a first deflection of said collision element (110.1), being deflected due to a shift between said first hard stop element (114.3) and said second hard stop element (114.4) in a first direction,
- a further resetting element (114.1, 114.2) of said resetting unit (114), in particular, being located between a counter hard stop element (114.3) and a third hard stop element (114.6), said further resetting element (114.1, 114.2), during a second deflection of said collision element (110.1), being deflected due to a shift between said counter hard stop element (114.3) and said third hard stop element (114.6) in a second direction opposite to said first direction;
- said resetting element (114.1, 114.2) and/or said further resetting element (114.1, 114.2), in particular, being guided during said deflection by a guide element (114.4), in particular by a linear guide element and/or a rod element;
- said third hard stop element (114.6) or a mechanical connection of said third hard stop element (114.6) to said mounting device (109), in particular, failing at a definable threshold shift between said counter hard stop element (114.3) and said third hard stop element (114.6) in said second direction to substantially liberate motion of said collision element (110.1).

13. The method according to one of claims 10 to 12, wherein
- said collision unit (110) undergoes a deflection from said neutral position in a first direction upon a first type of collision event and undergoes a deflection from said neutral position in a second direction opposite to said first direction upon a second type of collision event;
- a resetting force is generated during said resetting action in said second direction upon said first type of collision event;
- a resetting force is generated during said resetting action in said first direction upon said second type of collision event;
- said first type of collision event, in particular, being a collision with a collision partner (107, 108) located on a track travelled by said vehicle;
- said second type of collision event, in particular, being a collision with a part of said track during a derailment event of said vehicle.

14. The method according to one of claims 10 to 13, wherein,
- said collision unit (110), during said first threshold collision event, undergoes a first collision unit deflection from said neutral position and, during said second threshold collision event, undergoes a second collision unit deflection, said second collision unit deflection being larger than said first collision unit deflection;
- said collision unit (110) comprising a collision energy absorbing plastic deformation part (110.3) for reducing collision loads introduced into said vehicle;
- a plastic deformation part (110.3), in a third collision event having a severity greater that said second threshold severity, undergoes a defined locally concentrated plastic deformation;
- said plastic deformation part (110.3), in particular, being a structurally weakened section and/or a recessed section of said collision unit (110);
- a hard stop element, in particular, limiting a reversible deflection of said collision unit (110) to a limit deflection, said limit deflection being substantially equal to or greater than said second collision unit deflection.

15. The method according to one of claims 10 to 14, wherein,
- a second threshold collision signal representative of said second threshold collision event is generated as a function of a second threshold relative deflection of said collision unit (110) relative to said mounting device (109) from said neutral position during said second threshold collision event;
and/or
- a third threshold collision signal representative of a third threshold collision event is generated as a function of a third threshold relative deflection of said collision unit (110) relative to said mounting device (109) from said neutral position during a third collision event having a severity larger than said second threshold severity;
and/or,
- in a collision event of a first type of collision event, a first collision type signal representative of said first type of collision event is generated and, in a collision event of a second type of collision event, a second collision type signal representative of said second type of collision event is generated, said first type of collision event, in particular, being a collision with a collision partner (107, 108) located on a track travelled by said vehicle and said second type of collision event, in particular, being a collision with a part of said track during a derailment event of said vehicle, said collision unit (110), in particular, undergoing a deflection from said neutral position in a first direction upon said first type of collision event and undergoing a deflection from said neutral position in a second direction opposite to said first direction upon said second type of collision event;
and/or
- said collision signal is generated using an inductive sensor unit and/or a capacitive sensor unit and/or a contactless sensor unit.
and/or
- an indicator element cooperates with a sensor element to generate said collision signal, said indicator element and being connected to and deflected with said collision element (110.1) in an collision event.
